# EUROPEAN PATENT SPECIFICATION

(11) **EP 3 726 882 B1**
(45) Date of publication and mention of the grant of the patent: **18.11.2026**
(21) Application number: 20161343.7
(22) Date of filing: 28.12.2015
(51) Int. Cl.: H04W 36/24, H04W 36/36, H04W 64/00

(54) **PATH PROCESSING METHOD AND APPARATUS, AND TERMINAL**
PFADVERARBEITUNGSVERFAHREN UND -VORRICHTUNG SOWIE ENDGERÄT
PROCÉDÉ ET APPAREIL DE TRAITEMENT DE TRAJET ET TERMINAL

(43) Date of publication of application: 21.10.2020
(62) Document number(s) of the earlier application(s) in accordance with Art. 76 EPC: 15911678.9 / 3 373 648
(73) Proprietor: Huawei Technologies Co., Ltd., Longgang District Shenzhen, Guangdong 518129 (CN)
(72) Inventor: NI, Hui, Shenzhen, Guangdong (CN); LI, Yongcui, Shenzhen, Guangdong (CN)
(74) Representative: Huawei European IPR

(56) References cited:
- WO-A1-2014/130091
- US-A1- 2014 169 330
- US-A1- 2015 327 110

## Description

### TECHNICAL FIELD

The present invention relates to the field of communications technologies, and in particular, to a path processing method and apparatus, and a terminal.

### BACKGROUND

A core network is an important part of an evolved packet system (Evolved Packet System, EPS). Key logical network elements of a core network may include a mobility management entity (Mobility Management Entity, MME), a serving gateway (Serving Gateway, S-GW), a packet data network gateway (Packet Data Network Gateway, P-GW), a home subscriber server (Home Subscriber Server, HSS), and the like. The P-GW is a gateway connected to an external data network, and is a user plane anchor between an access network and a non-access network. To be specific, user equipment may establish a packet data network (Packet data network, PDN) connection by using the P-GW, to access the external data network. When the user equipment moves, an IP address and uplink and downlink paths of the user equipment need to be anchored at a forwarding plane device such as the P-GW, to ensure service continuity when a user moves.

However, it is found in practice that when user equipment moves, service packet transmission paths of the user equipment need to be anchored at a source forwarding plane network element, leading to long uplink and downlink paths and a relatively long network latency is. As communications technologies develop, broadband access technologies for user equipment, such as wireless-fidelity (Wireless-Fidelity, Wi-Fi), Worldwide Interoperability for Microwave Access (Worldwide Interoperability for Microwave Access, WiMAX), and a third-generation or fourth-generation mobile communications technology 3G/4G, have made significant progress. In addition, an EPS system also supports a plurality of PDN connections between user equipment and a PDN network, allowing the user equipment to have a plurality of PDN connections to a target node at the same time. However, for user equipment having a plurality of PDN connections, how to select a proper PDN connection from the plurality of PDN connections to improve service packet transmission quality is a problem that urgently needs to be resolved.

WO 2014/130091 A1 relates to methods, systems and devices for network selection and traffic routing.

### SUMMARY

The invention is defined by the appended claims.

This application discloses a path processing method, according to claim 1, a terminal, according to claim 6, and a computer-readable storage medium, according to claim 7, to select a proper PDN connection for user equipment to improve service packet transmission quality.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a service flow transmission path after user equipment moves according to an embodiment;
FIG. 2 is a schematic diagram of a system architecture with a plurality of PDN connections according to an embodiment;
FIG. 3 is a schematic flowchart of a path processing method according to an embodiment of the present invention according to claim 1;
FIG. 4 is a schematic structural diagram of a path processing apparatus according to an embodiment of the present invention according to claim 6; and
FIG. 5 is a schematic structural diagram of user equipment according to an embodiment.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention as long as they fall within the terms of the appended claims.

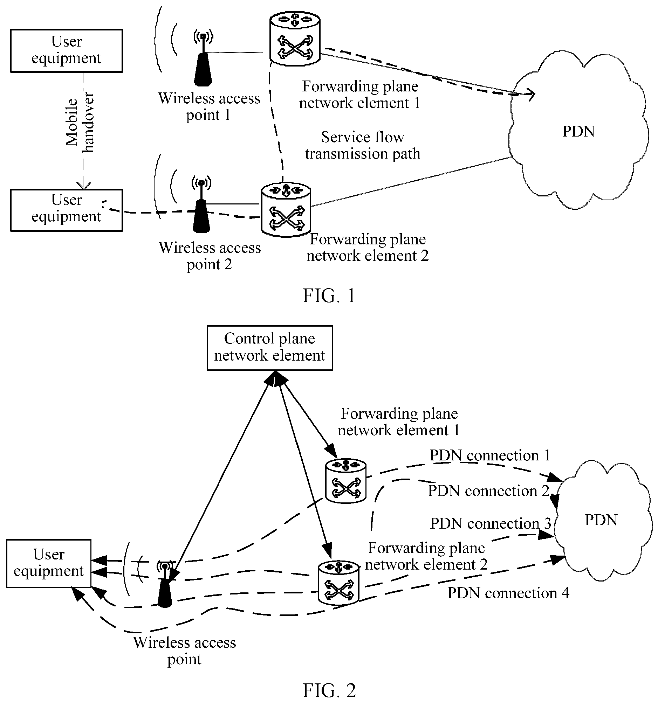

Referring to FIG. 1, FIG. 1 is a schematic diagram of a service flow transmission path after user equipment moves according to an embodiment of the present invention. The user equipment shown in FIG. 1 may be any mobile or portable electronic device, including, but not limited to, a mobile phone, a mobile computer, a tablet computer, a personal digital assistant (Personal Digital Assistant, PDA), a media player, a smart television, or a combination of two or more of the foregoing devices. This is not limited in this embodiment of the present invention. A forwarding plane network element shown in FIG. 1 may include a serving gateway (Serving Gateway, S-GW), a packet data network gateway (Packet Data Network Gateway, P-GW), or a forwarding plane network element of the S-GW/P-GW. The serving gateway (Serving Gateway, S-GW) is a data anchor in an access network, is configured to route and forward packet data, and is an anchor for local mobility management. The packet data network gateway (Packet Data Network Gateway, P-GW) is a gateway connected to an external data network, and is a user plane anchor between an access network and a non-access network. The user equipment needs to establish a PDN connection by using a forwarding plane device, to access external packet data networks. The packet data networks may be Internet, a virtual private network, an IP multimedia service network, a Wireless Application Protocol network provided by an operator, or the like. The forwarding plane network element of the S-GW/P-GW is a logical unit having a forwarding plane function after control and forwarding of the S-GW/P-GW are separated, and is configured to forward a user packet. As shown in FIG. 1, service flow transmission paths for transmitting service packets when the user equipment moves need to be anchored at a source forwarding plane network element (that is, a forwarding plane network element 1) at which a service flow transmission path is anchored before movement. That is, a service packet needs to be transmitted a PDN network by using the forwarding plane network element 2 and the forwarding plane network element 1. Consequently, after movement, a service flow path initiated by using the PDN connection is relatively long, and service transmission quality is poor.

To resolve the foregoing problem, an EPS system supports a plurality of PDN connections between the user equipment and a PDN network, and a service packet may be migrated to a proper PDN connection to reduce a network latency and improve service transmission quality. Referring to FIG. 2, FIG. 2 is a schematic diagram of a system architecture with a plurality of PDN connections according to an embodiment of the present invention. As shown in FIG. 2, the system architecture with a plurality of PDN connections includes user equipment, a wireless access point associated with the user equipment at a current location (where the wireless access point includes at least one of a 3G wireless access point 1, a 4G wireless access point 2, or a Wi-Fi wireless access point 3), a control plane network element, a forwarding plane network element 1, a forwarding plane network element 2, and the like. The wireless access point is a device providing wireless access for the user equipment, and includes, but is not limited to, a base station in 3G/4G, Long Term Evolution (Long Term Evolution, LTE) of Universal Mobile Telecommunications System, or WiMAX, or wireless access point in Wi-Fi. The control plane network element is configured to be responsible for performing mobility management in a mobile network and allocating a forwarding plane device having an optimal path for each PDN connection. The control plane network element may include some functions of a mobility management entity (Mobility Management Entity, MME) and a mobile gateway controller and the like. The forwarding plane network element is configured to provide IP address anchoring for the user equipment and is, for example, a physical or virtual forwarding device such as a P-GW, a router, or a switch. As shown in FIG. 2, the user equipment may establish a plurality of PDN connections by using a same forwarding plane network element or a plurality of forwarding plane network elements, to access a PDN network. Each of the plurality of PDN connections is a communication connection used by the user equipment to access the PDN network based on one IP address. The plurality of PDN connections enable the user equipment to simultaneously have a plurality of paths to a target node, for example, a path 1 based on a PDN connection 1, a path 2 based on a PDN connection 2, a path 3 based on a PDN connection 3, and a path 4 based on a PDN connection 4. However, for user equipment having a plurality of PDN connections, how to select a proper PDN connection to optimize a service transmission path and improve service transmission quality is a problem that urgently needs to be resolved.

To resolve the foregoing problem, an embodiment of the present invention discloses a path processing method, to select a proper PDN connection for user equipment to optimize a service transmission path and improve service transmission quality. Details descriptions are provided below.

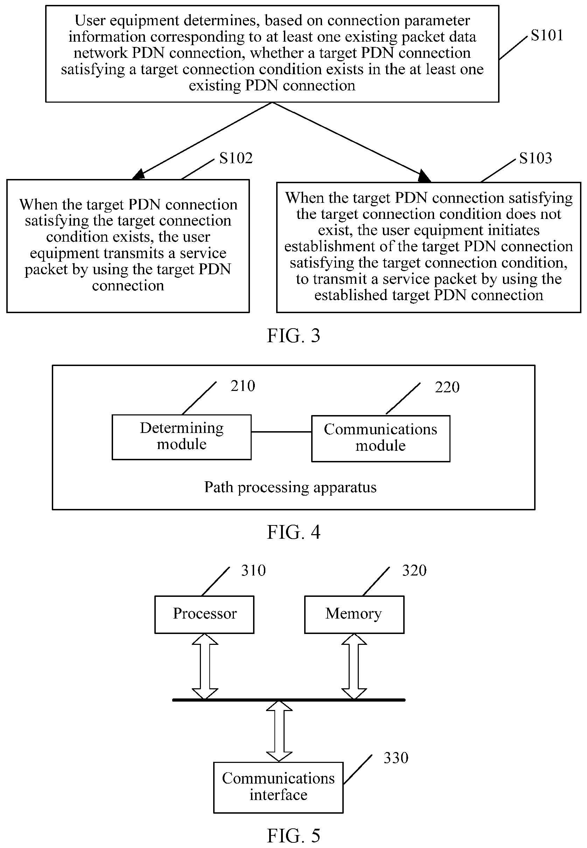

Referring to FIG. 3, FIG. 3 is a schematic flowchart of a path processing method according to an embodiment of the present invention. As shown in FIG. 3, the path processing method may include the following steps:
S101: User equipment determines, based on connection parameter information corresponding to at least one existing packet data network PDN connection, whether a target PDN connection satisfying a target connection condition exists in the at least one existing PDN connection.

In this embodiment of the present invention, when a handover is caused by movement of the user equipment, the user equipment may perform steps S101 to S104 to select a proper path for a service flow that is being transmitted by the user equipment, to reduce a service packet transmission latency; or when the user equipment initiates a new service flow, which may also be a service sub-flow initiated by the user equipment before the mobile handover, the user equipment may perform steps S101 to S104 to select a proper path for the new service flow, to reduce a service packet transmission latency. The handover caused by movement of the user equipment includes a cell handover in a cellular network such as a 3G/4G network, a wireless access point handover in a Wi-Fi or WiMAX network, and the like. This is not limited in this embodiment of the present invention.

In this embodiment of the present invention, the connection parameter information corresponding to the existing PDN connection includes at least one of a service feature indicator that the PDN connection can satisfy, a location area corresponding to the PDN connection, or a priority corresponding to the PDN connection. The priority is used to indicate that when there are a plurality of PDN connections satisfying the target connection condition, a target PDN connection is selected based on the priority.

In this embodiment of the present invention, the connection parameter information corresponding to the PDN connection is obtained from a control plane network element in a process of establishing each PDN connection, or is obtained from a broadcast message of a base station, or is obtained from an access network discovery and selection function (Access Network Discovery and Selection Function, ANDSF) server. For example, the obtaining of the connection parameter information from the control plane network element in the process of establishing each PDN connection may include the following steps: The user equipment sends a connection establishment request to a wireless access point (for example, a base station in 3G/4G, LTE, or WiMAX, or a wireless access point in Wi-Fi). The connection establishment request includes current location information of the user equipment (for example, a cell identifier, a base station identifier, or a physical location identifier for positioning). The wireless access point sends the connection establishment request to the control plane network element. After receiving the connection establishment request, the control plane network element selects, for the user equipment based on a location indicated by the current location information of the user equipment and service ranges of forwarding plane network elements, a forwarding plane network element that has an optimal path and that satisfies a feature condition of a service to be transmitted by using the connection, and determines location area information of the connection (where a location range indicated by the location area information includes the location indicated by the current location information of the user equipment). The control plane network element or the forwarding plane device may assign, to the connection, a PDN connection address anchored at the forwarding plane device. The control plane network element sends a connection establishment response message to the wireless access point. The connection establishment response message includes the connection parameter information of the connection. The connection parameter information of the connection uses an IP as an index, and is for example, any one or more of the location area information, a service feature indicator that satisfies the feature condition of the service to be transmitted by using the connection, or a priority.

In this embodiment of the present invention, the connection parameter information corresponding to the PDN connection may be stored in the user equipment in a form of a relational table. Alternatively, a correspondence between the PDN connection and the location area information may be implemented in another manner, for example, by using a hash algorithm. Table 1 is a relational table of connection parameter information corresponding to a plurality of PDN connections that is determined by user equipment according to an embodiment of the present invention. As shown in Table 1, in the relational table, an IP address of each PDN connection is used as an index. The IP address is a logical address that is assigned when the PDN connection is established or that is used to access a network. Each PDN connection uses an IP address as an index. A location area of each PDN connection, a service feature indicator such as a latency and a packet loss rate that each PDN connection can satisfy, and a priority of each PDN connection are correspondingly stored. The location area is an area to which the PDN connection is applicable, and may be represented by using a cell identifier list, a physical location range, an area identifier list, a route distinguisher list, a forwarding identifier list, a base station identifier list, or the like.

**Table 1**

| Relational table | | | |
|---|---|---|---|
| IP₁ | Location area 1 | Service feature indicator 1 | Priority 1 |
| IP₂ | Location area 2 | Service feature indicator 2 | Priority 2 |
| IP₃ | Location area 3 | Service feature indicator 3 | Priority 3 |
| IP₄ | Location area 4 | Service feature indicator 4 | Priority 4 |

S102: When the target PDN connection satisfying the target connection condition exists, the user equipment transmits a service packet by using the target PDN connection.

In this embodiment of the present invention, the target connection condition may be preconfigured in the user equipment. The target connection condition may include at least one of the following: a location area corresponding to the PDN connection includes or is a current location of the user equipment; a service feature indicator of the PDN connection satisfies a service feature condition required by the service flow; and the PDN connection has a highest priority. The service feature condition may be a QCI (QoS Class Identifier) value such as a maximum latency and packet loss rate required by the service flow. The QCI value is used for measuring a particular packet forwarding behavior provided for the service flow. If a base station identifier list of the location area of the PDN connection includes a current base station identifier of the user equipment, it indicates that the location area of the PDN connection includes the current location of the user equipment. Similarly, if a location area indicated by physical location information of the PDN connection is or includes a location indicated by physical location information obtained by the user equipment by positioning, it indicates that the location area of the PDN connection includes the current location of the user equipment.

**In** this embodiment of the present invention, the service packet transmitted by the user equipment by using the target PDN connection may be a packet of a service flow initiated by the user equipment before the mobile handover, or may be a packet of a new service flow initiated by a user after the mobile handover. This is not limited in this embodiment of the present invention.

S103: When the target PDN connection satisfying the target connection condition does not exist, the user equipment initiates establishment of the target PDN connection satisfying the target connection condition, to transmit a service packet by using the established target PDN connection.

**In** this embodiment of the present invention, that the user equipment initiates establishment of the target PDN connection satisfying the target connection condition includes the following steps:
The user equipment sends a PDN connection establishment request to the control plane network element by using the current base station. The PDN connection establishment request includes the current location and/or the service feature condition of the user equipment. The control plane network element selects a forwarding plane network element for the user equipment based on the current location and/or the service feature condition of the user equipment. The forwarding plane network element or the control plane network element assigns an IP address to the PDN connection. Correspondingly, the user equipment may receive a PDN connection establishment response message returned by the control plane network element by using the base station. The PDN connection establishment response message includes the IP address of the PDN connection, and may further include at least one of the location area, the service feature indicator, and the priority corresponding to the PDN connection.

As can be learned, in the path processing method shown in FIG. 3, the user equipment determines, based on the connection parameter information corresponding to the at least one existing packet data network PDN connection, whether the at least one existing PDN connection includes the target PDN connection satisfying the target connection condition; when the target PDN connection satisfying the target connection condition exists, the user equipment may transmit the service packet by using the target PDN connection; or when the target PDN connection satisfying the target connection condition does not exist, the user equipment may initiate establishment of the target PDN connection satisfying the target connection condition, to transmit the service packet by using the established target PDN connection. As can be learned, in this embodiment of the present invention, when the service packet is transmitted, the service packet may be transmitted by using the target PDN connection satisfying the target connection condition, thereby reducing a service transmission latency, improving service transmission quality, and so on.

For example, a plurality of PDN connections maintained by the user equipment after a mobile handover are shown in FIG. 2. Before the handover, a service packet of a service flow of the user equipment is transmitted by using the PDN connection 2 in FIG. 2. After the handover, the user equipment may determine to use the PDN connection 3 for service transmission of the service flow by using the path processing method in this embodiment. Because the PDN connection 3 may directly connect to a PDN network by using a forwarding plane device 3, a service transmission latency of the service flow is reduced. When the user equipment initiates a new service flow, PDN connections satisfying the target connection condition that the location area corresponding to the PDN connection is or includes the current location of the user equipment include the PDN connection 3 and the PDN connection 4. In the PDN connection 3 and the PDN connection 4, the PDN connection 4 satisfies the target connection condition that the service feature indicator corresponding to the PDN connection satisfies a service feature condition required by the new service flow or the PDN connection has a relatively high priority. The user equipment may perform service packet transmission for the new service flow by using the PDN connection 4, to reach service transmission quality such as a transmission latency or a packet loss rate required by the new service flow. Optionally, if neither of the service feature indicators corresponding to the PDN connection 3 and the PDN connection 4 satisfies the service feature condition required by the new service flow, the user equipment may establish, by sending a connection establishment request to the control plane network element, the target PDN connection satisfying the target connection condition, and transmit the service packet by using the established target PDN connection, to reach service transmission quality such as a transmission latency or a packet loss rate required by the new service flow.

Referring to FIG. 4, FIG. 4 is a schematic structural diagram of a path processing apparatus according to an embodiment of the present invention. As shown in FIG. 4, the path processing apparatus may include a determining module 210 and a communications module 220.

The determining module 210 is configured to determine, based on connection parameter information corresponding to at least one existing packet data network PDN connection, whether a target PDN connection satisfying a target connection condition exists in the at least one existing PDN connection.

The communications module 220 is configured to: when the target PDN connection satisfying the target connection condition exists, transmit a service packet by using the target PDN connection.

The communications module 220 is further configured to: when the target PDN connection satisfying the target connection condition does not exist, initiate establishment of the target PDN connection satisfying the target connection condition, to transmit a service packet by using the established target PDN connection.

In this embodiment of the present invention, the connection parameter information may include at least one of a location area, a service feature indicator, and a priority. The priority is a priority of a PDN connection selected as the target PDN connection. The target PDN connection satisfying the target connection condition satisfies one or more of the following conditions: a location area corresponding to the target PDN connection is or includes a current location of the user equipment of the path processing apparatus; a service feature indicator corresponding to the target PDN connection satisfies a service feature condition required by a service flow; and the target PDN connection has a highest priority.

In this embodiment of the present invention, the connection parameter information corresponding to the at least one existing packet data network PDN connection is obtained from a control plane network element in a process of establishing each PDN connection, or is obtained from a broadcast message of a wireless access point, or is obtained by the user equipment of the path processing apparatus from an access network discovery and selection function ANDSF server.

In this embodiment of the present invention, that the communications module 220 initiates establishment of the target PDN connection satisfying the target connection condition may be specifically: the communications module 220 sends a PDN connection establishment request to the control plane network element. The PDN connection establishment request includes the current location of the user equipment, and the current location of the user equipment is used to select a forwarding plane network element. The PDN connection establishment request may further include a service feature condition required by the service flow.

In this embodiment of the present invention, the path processing apparatus may execute any one or more of the steps or implementations of the path processing method shown in FIG. 3. This is not limited in this embodiment of the present invention.

Referring to FIG. 5, FIG. 5 is a schematic structural diagram of user equipment according to an embodiment of the present invention. As shown in FIG. 5, the user equipment may include a processor 310, a memory 320, and a communications interface 330. A person skilled in the art may understand that the structure of the user equipment shown in FIG. 5 does not constitute a limitation to the present invention. The user equipment may be a bus structure or a star structure, and may include more or fewer components than those shown in the figure, or some components may be combined, or a different component deployment may be used.

In an implementation of the present invention, the processor 310 is a control center of the user equipment, and connects various parts of the user equipment by using various interfaces and circuits. The processor runs or executes a software program and/or module stored in a storage unit, and invokes data stored in the storage unit, to perform various functions and/or data processing of an electronic device. The processor 310 may include an integrated circuit (Integrated Circuit, IC for short), for example, may include a single packaged IC, or may include a plurality of packaged ICs having same or different functions that are connected. For example, the processor 310 may include only a central processing unit (Central Processing Unit, CPU for short), or may be a combination of a GPU, a digital signal processor (Digital Signal Processor, DSP for short), and a control core (for example, a baseband core) of a communications unit. In an implementation of the present invention, the CPU may include a single computing core, or may include a plurality of computing cores.

In an implementation of the present invention, the memory 320 may be configured to store a software program and module. The processor 310 runs the software program and module stored in the memory 320, to implement various functional applications and data processing of the user equipment. The memory 320 mainly includes a program storage area and a data storage area. The program storage area may store an operating system and an application program required by at least one function, such as a path processing program. The data storage area may store data created based on use of the user equipment, and the like. In a specific implementation of the present invention, the memory 320 may include a volatile memory, for example, a nonvolatile dynamic random access memory (Nonvolatile Random Access Memory, NVRAM for short), a phase change random access memory (Phase Change RAM, PRAM for short), a magnetoresistive random access memory (Magnetoresistive RAM, MRAM for short), or the like, and may further include a non-volatile memory, for example, at least one magnetic disk storage device, an electrically erasable programmable read-only memory (Electrically Erasable Programmable Read-Only Memory, EEPROM for short), or a flash memory device such as a NOR flash memory (NOR flash memory) or a NAND flash memory (NAND flash memory). The non-volatile memory stores an operating system and an application program executed by a processing unit. The processor 310 loads a running program and data from the non-volatile memory to a memory, and stores digital content in a mass storage apparatus. The operating system includes various components and/or drives that are configured to control and manage routine system tasks such as memory management, storage device control, and power supply management, and that facilitate communication between various software and hardware. In an implementation of the present invention, the operating system may be an Android system developed by Google, an iOS system developed by Apple, a Windows operating system developed by Microsoft, or an embedded operating system such as Vxworks.

In an implementation of the present invention, the communications interface 330 is configured to establish a communication channel, so that the user equipment connects to a remote server by using the communication channel and downloads data from the remote server. The communications interface 330 may include a communications module such as a wireless local area network (Wireless Local Area Network, wireless LAN for short) module, a Bluetooth module, or a baseband (Base Band) module, and a radio frequency (Radio Frequency, RF for short) circuit corresponding to the communications module, and is configured to perform wireless local area network communication, Bluetooth communication, infrared communication, and/or communication of a cellular communications system, for example, Wideband Code Division Multiple Access (Wideband Code Division Multiple Access, W-CDMA for short) and/or High Speed Downlink Packet Access (High Speed Downlink Packet Access, HSDPA for short). The communications module is configured to control communication of components in the electronic device, and supports direct memory access (Direct Memory Access).

In an implementation of the present invention, the processor 310 is configured to determine, based on connection parameter information corresponding to at least one existing packet data network PDN connection, whether a target PDN connection satisfying a target connection condition exists in the at least one existing PDN connection. The memory 320 may be configured to store the connection parameter information corresponding to the at least one existing PDN connection. The processor 310 is further configured to: when the target PDN connection satisfying the target connection condition exists, transmit a service packet by using the communications interface 330 and the target PDN connection. The processor 310 is further configured to: when the target PDN connection satisfying the target connection condition does not exist, initiate, by using the communications interface 330, establishment of the target PDN connection satisfying the target connection condition, to transmit a service packet by using the established target PDN connection.

The connection parameter information includes at least one of a location area, a service feature indicator, and a priority. The priority is a priority of a PDN connection selected as the target PDN connection. The target PDN connection satisfying the target connection condition satisfies one or more of the following conditions: a location area corresponding to the target PDN connection is or includes a current location of the user equipment; a service feature indicator corresponding to the target PDN connection satisfies a service feature condition required by a service flow; and the target PDN connection has a highest selection priority.

In this embodiment of the present invention, the connection parameter information corresponding to the at least one existing packet data network PDN connection is obtained from a control plane network element in a process of establishing each PDN connection, or is obtained from a broadcast message of a wireless access point, or is obtained by the user equipment from an access network discovery and selection function ANDSF server.

In this embodiment of the present invention, that the processor 310 initiates, by using the communications interface 330, establishment of the target PDN connection satisfying the target connection condition may be: the processor 310 sends a PDN connection establishment request to the control plane network element by using the communications interface 330. The PDN connection establishment request may include the current location of the user equipment, and the current location of the user equipment is used to select a forwarding plane network element.

In this embodiment of the present invention, the processor 310 in the user equipment may execute any one or more of the steps or implementations of the path processing method shown in FIG. 3. This is not limited in this embodiment of the present invention.

In an embodiment, an embodiment of the present invention further discloses a computer storage medium, where the computer storage medium stores a computer program. When the computer program in the computer storage medium is read to a computer, the computer can be enabled to complete all steps of the path processing method disclosed in this embodiment of the present invention.

It should be noted that, for brief description, the foregoing method embodiments are represented as a series of actions. However, a person skilled in the art should appreciate that the present invention is not limited to the described order of the actions, because according to the present invention, some steps may be performed in other orders or simultaneously. In addition, a person skilled in the art should also appreciate that all the embodiments described in the specification are example embodiments, and the related actions and modules are not necessarily mandatory to the present invention.

A person of ordinary skill in the art may understand that all or some of the steps of the methods in the embodiments may be implemented by a program instructing relevant hardware. The program may be stored in a computer readable storage medium. The storage medium may include a flash memory, a read-only memory (Read-Only Memory, ROM), a random access memory (Random Access Memory, RAM), a magnetic disk, and an optical disc.

The foregoing describes in detail the path processing method and apparatus, and the user equipment provided in the embodiments of the present invention. In this specification, specific examples are used to describe the principle and implementations of the present invention, and the description of the embodiments is only intended to help understand the method and core idea of the present invention. In addition, a person of ordinary skill in the art may, based on the idea of the present invention, make modifications with respect to the specific implementations and the application scope as long as said modifications fall within the terms of the appended claims. Therefore, the content of this specification shall not be construed as a limitation to the present invention which is only defined by the appended claims.

## Claims

1. A path processing method, comprising:
when a terminal initiates a new service flow, determining (S101), by the terminal, whether the terminal has an existing packet data network connection, wherein connection parameter information corresponding to the existing packet data network connection satisfies a target connection condition required by the service flow when a transmission latency corresponding to the existing packet data network connection satisfies a service feature condition required by the service flow; and
in response to when the terminal has the existing packet data network connection, transmitting (S102), by the terminal, a service packet of the service flow by using the existing packet data network connection; or
in response to when the terminal does not have the existing packet data network connection, initiating, by the terminal, establishment of a target packet data network connection, and transmitting the service packet of the service flow by using the target packet data network connection, wherein connection parameter information corresponding to the target packet data network connection satisfies the target connection condition required by the service flow when a transmission latency corresponding to the target packet data network connection satisfies the service feature condition required by the service flow.

2. The method according to claim 1, wherein the initiating, by the terminal, establishment of a target packet data network connection comprises:
transmitting, by the terminal, a packet data network connection establishment request to a control plane network element, wherein the packet data network connection establishment request comprises the service feature condition required by the service flow, and the service feature condition required by the service flow is used for selection of a forwarding plane network element for the target packet data network connection.

3. The method according to claim 2, wherein the packet data network connection establishment request further comprises a current location of the terminal.

4. The method according to claim 2 or 3, further comprising:
receiving, by the control plane network element, the packet data network connection establishment request; and
selecting, by the control plane network element, the forwarding plane network element for the target packet data network connection based on the service feature condition required by the service flow comprised in the packet data network connection establishment request.

5. The method according to any one of claims 1 to 4, further comprising:
obtaining, by the terminal, the transmission latency corresponding to the existing packet data network connection from a control plane network element in a process of establishing the existing packet data network connection.

6. A terminal, comprising means configured to perform the method according to any one of claims 1 to 5.

7. A computer-readable storage medium comprising instructions which, when executed by a computer, cause the computer of a terminal to carry out the method according to any one of claims 1 to 5.

## Patentansprüche

1. Pfadverarbeitungsverfahren, umfassend:
wenn ein Endgerät einen neuen Dienstfluss einleitet, Bestimmen (S101) durch das Endgerät, ob das Endgerät eine existierende Paketdaten-Netzwerkverbindung aufweist, wobei der existierenden Paketdaten-Netzwerkverbindung entsprechende Verbindungsparameterinformationen eine durch den Dienstfluss erforderte Ziel-Verbindungsbedingung erfüllen, wenn eine der existierenden Paketdaten-Netzwerkverbindung entsprechende Übertragungslatenz eine durch den Dienstfluss erforderte Dienstmerkmalbedingung erfüllt; und
als Reaktion darauf, dass das Endgerät die existierende Paketdaten-Netzwerkverbindung aufweist, Übertragen (S102) eines Dienstpakets des Dienstflusses durch das Endgerät unter Verwendung der existierenden Paketdaten-Netzwerkverbindung; oder
als Reaktion darauf, dass das Endgerät die existierende Paketdaten-Netzwerkverbindung nicht aufweist, Einleiten der Herstellung einer Ziel-Paketdaten-Netzwerkverbindung durch das Endgerät und Übertragen des Dienstpakets des Dienstflusses unter Verwendung der Ziel-Paketdaten-Netzwerkverbindung, wobei der Ziel-Paketdaten-Netzwerkverbindung entsprechende Verbindungsparameterinformationen die durch den Dienstfluss erforderte Ziel-Verbindungsbedingung erfüllen, wenn eine der Ziel-Paketdaten-Netzwerkverbindung entsprechende Übertragungslatenz die durch den Dienstfluss erforderte Dienstmerkmalbedingung erfüllt.

2. Verfahren nach Anspruch 1, wobei das Einleiten der Herstellung einer Ziel-Paketdaten-Netzwerkverbindung durch das Endgerät Folgendes umfasst:
Übertragen einer Paketdaten-Netzwerkverbindungs-Herstellungsanforderung zu einem Steuerebene-Netzwerkelement durch das Endgerät, wobei die Paketdaten-Netzwerkverbindungs-Herstellungsanforderung die durch den Dienstfluss erforderte Dienstmerkmalbedingung umfasst und die durch den Dienstfluss erforderte Dienstmerkmalbedingung zur Auswahl eines Weiterleitungsebenen-Netzwerkelements für die Ziel-Paketdaten-Netzwerkverbindung verwendet wird.

3. Verfahren nach Anspruch 2, wobei die Paketdaten-Netzwerkverbindungs-Herstellungsanforderung ferner einen aktuellen Standort des Endgeräts umfasst.

4. Verfahren nach Anspruch 2 oder 3, ferner umfassend:
Empfangen der Paketdaten-Netzwerkverbindungs-Herstellungsanforderung durch das Steuerebenen-Netzwerkelement; und
Auswählen des Weiterleitungsebenen-Netzwerkelements für die Ziel-Paketdaten-Netzwerkverbindung durch das Steuerebenen-Netzwerkelement auf der Basis der durch den Dienstfluss erforderten Dienstmerkmalbedingung, die in der Paketdaten-Netzwerkverbindungs-Herstellungsanforderung enthalten ist.

5. Verfahren nach einem der Ansprüche 1 bis 4, ferner umfassend:
Erhalten der der existierenden Paketdaten-Netzwerkverbindung entsprechenden Übertragungslatenz durch das Endgerät von einem Steuerebene-Netzwerkelement in einem Prozess des Herstellens der existierenden Paketdaten-Netzwerkverbindung.

6. Endgerät mit Mitteln, die dafür ausgelegt sind, das Verfahren nach einem der Ansprüche 1 bis 5 auszuführen.

7. Computerlesbares Speicherungsmedium, das Anweisungen umfasst, die, wenn sie durch einen Computer ausgeführt werden, bewirken, dass der Computer eines Endgeräts das Verfahren nach einem der Ansprüche 1 bis 5 ausführt.

## Revendications

1. Procédé de traitement de trajet, comprenant :
lorsqu'un terminal initie un nouveau flux de services, déterminer (S101), par le terminal, si le terminal a une connexion de réseau de données par paquets existante, dans lequel des informations de paramètres de connexion correspondant à la connexion de réseau de données par paquets existante satisfont la condition de connexion cible requise par le flux de services lorsqu'une latence de transmission correspondant à la connexion de réseau de données par paquets existante satisfait une condition de caractéristiques de services requise par le flux de services ; et
en réponse au moment où le terminal a la connexion de réseau de données par paquets existante, transmettre (S102), par le terminal, un paquet de services du flux de services en utilisant la connexion de réseau de données par paquets existante ; ou
en réponse au moment où le terminal n'a pas la connexion de réseau de données par paquets existante, initier, par le terminal, l'établissement d'une connexion de réseau de données par paquets cible, et transmettre le paquet de services du flux de services en utilisant la connexion de réseau de données par paquets cible, dans lequel des informations de paramètres de connexion correspondant à la connexion de réseau de données par paquets cible satisfont la condition de connexion cible requise par le flux de services lorsqu'une latence de transmission correspondant à la connexion de réseau de données par paquets cible satisfait la condition de caractéristiques de services requise par le flux de services.

2. Procédé selon la revendication 1, dans lequel l'initiation, par le terminal, de l'établissement d'une connexion de réseau de données par paquets cible comprend :
la transmission, par le terminal, d'une demande d'établissement de connexion de réseau de données par paquets à un élément de réseau de plan de commande, dans lequel la demande d'établissement de connexion de réseau de données par paquets comprend la condition de caractéristiques de services requise par le flux de services, et la condition de caractéristiques de services requise par le flux de services est utilisée pour la sélection d'un élément de réseau de plan de transmission pour la connexion de réseau de données par paquets cible.

3. Procédé selon la revendication 2, dans lequel la demande d'établissement de connexion de réseau de données par paquets comprend en outre une localisation actuelle du terminal.

4. Procédé selon la revendication 2 ou 3, comprenant en outre :
la réception, par l'élément de réseau de plan de commande, de la demande d'établissement de connexion de réseau de données par paquets ; et
la sélection, par l'élément de réseau de plan de commande, de l'élément de réseau de plan de transmission pour la connexion de réseau de données par paquets cible sur la base de la condition de caractéristiques de services requise par le flux de services comprise dans la demande d'établissement de connexion de réseau de données par paquets.

5. Procédé selon l'une quelconque des revendications 1 à 4, comprenant en outre :
l'obtention, par le terminal, de la latence de transmission correspondant à la connexion de réseau de données par paquets existante à partir d'un élément de réseau de plan de commande dans un processus d'établissement de la connexion de réseau de données par paquets existante.

6. Terminal, comprenant des moyens configurés pour mettre en œuvre le procédé selon l'une quelconque des revendications 1 à 5.

7. Support de stockage lisible par ordinateur comprenant des instructions qui, lorsqu'elles sont exécutées par un ordinateur, amènent l'ordinateur d'un terminal à exécuter le procédé selon l'une quelconque des revendications 1 à 5.
